# FASCICULE DE BREVET EUROPEEN

(11) **EP 2 223 124 B1**
(45) Date de publication et mention de la délivrance du brevet: **25.05.2011**
(21) Numéro de dépôt: 08872524.7
(22) Date de dépôt: 09.12.2008
(51) Int. Cl.: G01N 35/10, G01N 1/14, B01L 3/00

(54) **DISPOSITIF DE PRELEVEMENT DE LIQUIDE DANS UN TUBE FERME PAR UN BOUCHON**
VORRICHTUNG ZUR PROBENAHME EINER FLÜSSIGKEIT IN EINEM DURCH EINEN STOPFEN VERSCHLOSSENEN ROHR
DEVICE FOR SAMPLING A LIQUID IN TUBE CLOSED BY A PLUG

(30) Priorité: 13.12.2007 FR 0708689
(43) Date de publication de la demande: 01.09.2010
(73) Titulaire: Diagnostica Stago, 92600 Asnières (FR)
(72) Inventeur: LEROI Pierre, F - 27610 Romily Sur Andelle (FR); LAGARDE Benoît, F - 95110 Sannois (FR)
(74) Mandataire: Ramey, Daniel
(86) Numéro de dépôt international: PCT/FR2008/001714
(87) Numéro de publication internationale: WO 2009/103874

(56) Documents cités:
- EP-A- 0 520 796
- FR-A- 2 767 583
- FR-A- 2 810 407
- US-A- 4 274 453
- US-A- 5 400 666

## Description

L'invention concerne un dispositif de prélèvement de liquide dans un tube fermé par un bouchon, au moyen d'une aiguille creuse que l'on fait passer à travers le bouchon et qui est reliée à des moyens d'aspiration, pour le prélèvement d'une quantité déterminée du liquide contenu dans le tube.

Cette technique connue de prélèvement à travers le bouchon d'un tube a l'avantage de permettre d'effectuer le prélèvement sans ouverture du tube, donc en limitant les risques de contamination, d'une part, du liquide contenu dans le tube et, d'autre part, de l'environnement du tube.

Bien entendu, l'invention s'applique aux dispositifs de prélèvement de liquide dans des récipients d'un type quelconque fermés par des bouchons ou analogues et n'est pas limitée au prélèvement de liquide dans un tube. Pour simplifier la description, on décrira l'application de l'invention au prélèvement de liquide dans un tube fermé par un bouchon, bien qu'elle soit applicable à tous les types de récipients fermés par des bouchons ou analogues à travers lesquels on peut faire passer une aiguille de prélèvement.

Typiquement, le bouchon de fermeture du tube comprend un septum qui peut être traversé sans difficulté par l'aiguille de prélèvement tout en assurant une étanchéité autour de l'aiguille, et dans lequel le trou de passage de l'aiguille se referme de façon étanche lorsque l'aiguille est extraite du tube.

Toutefois, au retrait de l'aiguille, le frottement de l'aiguille dans le trou de passage formé dans le bouchon tend à soulever le tube et à le dégager de ses moyens de support et de positionnement, avec des risques de casse du tube et aussi des risques de perte d'identification de l'échantillon contenu dans le tube, lorsque les moyens d'identification sont portés par le support du tube.

Pour éviter ces inconvénients, on a déjà proposé d'équiper un tel dispositif de prélèvement de moyens d'immobilisation du tube, qui prennent appui sur la périphérie du bouchon ou sur l'extrémité supérieure du tube quand l'aiguille est descendue à travers le bouchon et qui retiennent ensuite le tube et l'empêchent de remonter avec l'aiguille tant que celle-ci n'est pas complètement sortie du bouchon.

Ces moyens connus comprennent un anneau ou une pièce d'appui sur le bouchon, cet anneau ou cette pièce étant monté à l'extrémité inférieure d'une crémaillère qui est guidée en translation verticale dans un palier porté par un élément de support. La crémaillère coopère avec un cliquet d'immobilisation et de blocage qui est sollicité vers la crémaillère par un ressort monté sur l'élément de support de telle façon que la crémaillère peut descendre dans le palier jusqu'à ce que l'anneau ou la pièce d'appui soit placé sur le bouchon ou sur l'extrémité supérieure du tube, la crémaillère étant alors bloquée dans cette position par le cliquet qui l'empêche de remonter avec l'aiguille tant que le ressort n'est pas écarté de la crémaillère par un doigt transversal qui est monté sur le support de l'aiguille et qui accompagne celle-ci dans son mouvement de remontée.

Ce système connu d'immobilisation de tube présente quelques inconvénients résultant essentiellement de l'usure du cliquet sur les dents de la crémaillère lors de la descente de celle-ci, des risques de glissement du cliquet sur les dents de la crémaillère et du positionnement vertical par pas de la crémaillère par rapport à son cliquet et à son support.

La présente invention a notamment pour but d'éliminer ces inconvénients.

Elle propose à cet effet un dispositif de prélèvement de liquide dans un tube fermé par un bouchon, comprenant une aiguille déplacée en translation par des moyens moteurs pour traverser le bouchon du tube, des moyens d'immobilisation du tube déplaçables avec l'aiguille pour s'appliquer sur le bouchon ou sur l'extrémité supérieure du tube quand l'aiguille est descendue à travers le bouchon, des moyens de blocage des Les documents FR 2 810 407, US 4 274 453 et US 5 400 666 représentent un état de la technique pertinent.

moyens d'immobilisation quand l'aiguille est remontée à travers le bouchon, et des moyens de déblocage des moyens d'immobilisation quand l'aiguille est sortie du bouchon, caractérisé en ce que les moyens de blocage comprennent une roue dentée montée tournante sur une chape par l'intermédiaire d'un mécanisme à rotation unidirectionnelle, ladite chape étant montée pivotante autour d'un axe entre une première position où la roue dentée est en prise avec une crémaillère parallèle à la direction de déplacement de l'aiguille et une seconde position où elle est écartée de cette crémaillère, le mécanisme à rotation unidirectionnelle de la roue dentée autorisant, quand la roue dentée est dans la première position, une descente des moyens d'immobilisation, et interdisant dans cette première position la remontée des moyens d'immobilisation.

Grâce à la coopération de la crémaillère avec la roue dentée à rotation unidirectionnelle, le positionnement de la pièce d'appui sur le bouchon ne dépend plus du pas entre les dents de la crémaillère. De plus, il n'y a aucune possibilité de glissement de la roue dentée par rapport aux dents de la crémaillère et l'usure de la roue dentée est très faible puisque répartie sur l'ensemble des dents de cette roue.

Ainsi, les moyens de blocage selon l'invention sont efficaces dès que les moyens d'immobilisation solidaires de la crémaillère sont en appui sur le bouchon ou sur l'extrémité supérieure du tube, sans qu'il soit nécessaire de procéder à un réglage quelconque à cet effet. Ensuite, le seul réglage nécessaire concerne la course de remontée de l'aiguille qui va permettre de débloquer les moyens d'immobilisation.

Selon une autre caractéristique de l'invention, le centre de gravité de la chape et de la roue dentée est excentré par rapport à l'axe fixe de rotation de façon à ce que la roue dentée soit ramenée par gravité dans sa première position.

Ainsi, aucun moyen de rappel de la roue dentée dans sa position de blocage de la crémaillère n'est nécessaire.

Par ailleurs, tout effort exercé sur les moyens d'immobilisation et tendant à les remonter quand la crémaillère est en prise avec la roue dentée, se traduit par un couple de rotation exercé sur la chape de la roue dentée qui maintient et renforce l'appui de la roue dentée sur les dents de la crémaillère. Le système formé par la roue dentée et la crémaillère est donc auto-bloquant.

Selon d'autres caractéristiques de l'invention :
- les moyens de déblocage comprennent une patte transversale solidaire de l'aiguille et venant s'appliquer, quand l'aiguille est sortie du bouchon, sur la chape de la roue dentée pour la faire pivoter autour de l'axe fixe et amener la roue dentée dans sa seconde position ;
- cette patte transversale porte un galet tournant de contact avec la chape de la roue dentée ;
- l'axe de pivotement de la chape de la roue dentée est monté sur un palier de guidage en translation monté sur la crémaillère ;
- la crémaillère et le palier de guidage sont immobilisés en rotation l'un par rapport à l'autre par un galet tournant porté par le palier et engagé sur la crémaillère.

Tous ces moyens contribuent à réduire l'usure du dispositif selon l'invention et à augmenter sa simplicité, sa sécurité de fonctionnement et sa durée de vie.

Dans un premier mode de réalisation de l'invention, la crémaillère est solidaire des moyens d'immobilisation tandis que le palier de guidage est monté sur un support fixe.

Dans un second mode de réalisation, la crémaillère est portée par un support fixe et c'est le palier de guidage qui est solidaire des moyens d'immobilisation.

Ce second mode de réalisation présente l'avantage que le dispositif selon l'invention est utilisable avec des tubes de hauteurs différentes et s'adapte automatiquement aux différentes hauteurs de tubes.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- les figures 1 et 2 représentent schématiquement un dispositif de prélèvement selon l'invention, en position de prélèvement et en position de déblocage respectivement ;
- la figure 3 représente schématiquement les moyens d'immobilisation de tube selon l'invention ;
- la figure 4 est une vue schématique en perspective de la roue dentée et de sa chape de support ;
- la figure 5 est une vue schématique illustrant le déblocage des moyens d'immobilisation du tube ;
- la figure 6 est un diagramme des forces agissant sur la roue dentée à la remontée de l'aiguille ;
- la figure 7 représente schématiquement une variante de réalisation de l'invention.

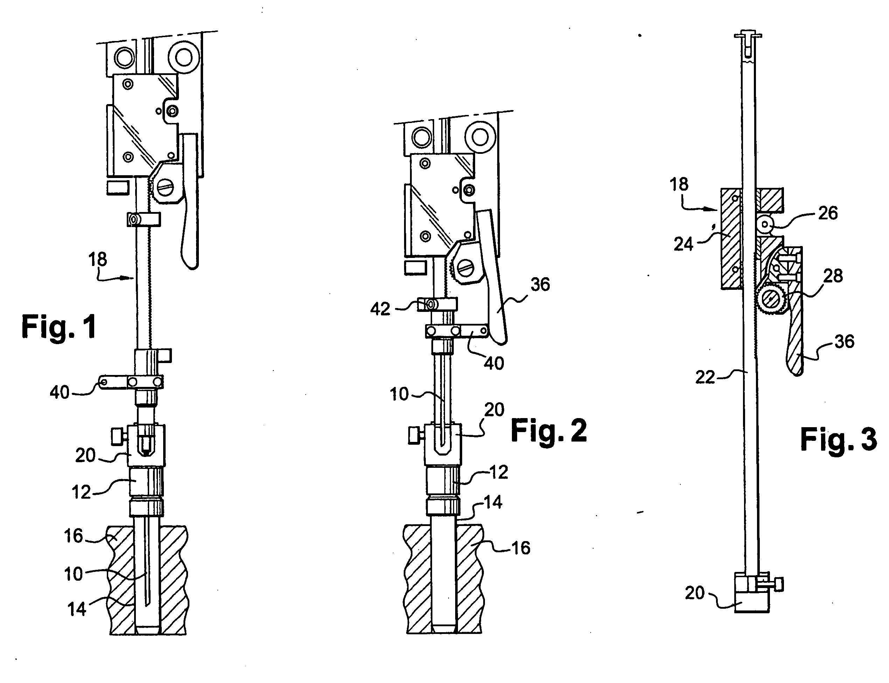

Le dispositif de prélèvement de liquide représenté schématiquement aux figures 1 et 2 comprend une aiguille creuse 10 déplaçable en mouvement vertical par des moyens moteurs pour traverser de façon étanche un bouchon 12 de fermeture d'un tube 14 contenant un liquide, tel par exemple qu'un échantillon biologique à analyser, ce bouchon étant du type septum ou comprenant un septum.

Le tube 14 est placé dans un logement d'un moyen de support 16 d'un type approprié quelconque.

L'aiguille 10 est reliée à son extrémité supérieure à des moyens d'aspiration pour le prélèvement d'une quantité déterminée du liquide contenu dans le tube 14.

L'immobilisation du tube 14 dans son logement est assurée par des moyens 18 qui sont parallèles à l'aiguille 10 et à ses moyens de déplacement et qui comprennent une pièce 20 d'appui sur le bouchon 12, cette pièce 20 comprenant un orifice de passage de l'aiguille 10 et étant montée à l'extrémité inférieure d'une crémaillère verticale 22 guidée en translation dans un palier 24 qui comporte (figure 3) un galet tournant 26 monté à rotation autour d'un axe horizontal et reçu dans une rainure verticale de la crémaillère 22 pour interdire la rotation de la crémaillère autour de son axe longitudinal dans le palier 24.

Ce palier est lui-même porté par un dispositif de prélèvement qui, de façon générale, est déplaçable dans un plan horizontal au-dessus du tube 14 ou d'une série de tubes 14 montés dans le support 16.

Les moyens d'immobilisation 18 comprennent également des moyens de blocage de la crémaillère 22, ces moyens de blocage étant formés essentiellement d'une roue dentée 28 (figures 3, 4 et 5) qui est montée à rotation autour d'un axe horizontal dans une chape 30 par l'intermédiaire d'un mécanisme 32 de rotation unidirectionnelle. La chape. 30 est elle-même montée pivotante à son extrémité supérieure autour d'un axe horizontal 34 sur le palier 24 de la crémaillère de façon à amener automatiquement, par gravité, la roue dentée 28 en prise avec la crémaillère. Un ressort de compression 35 monté sur le palier 24 s'appuie sur la chape 30 pour assurer une pression constante de la roue dentée 28 sur la crémaillère 22 et éviter les phénomènes de "rebond" lorsque les moyens 18 sont en phase descente.

Sur son côté longitudinal opposé à la roue dentée 28, la chape 30 porte ou comporte une came allongée 36 qui s'étend vers le bas et qui est destinée à coopérer avec un galet rotatif 38 monté à l'extrémité d'un doigt horizontal 40 qui est fixé sur le support de l'aiguille 10 et qui accompagne la remontée de cette aiguille de telle sorte que, quand le galet 38 vient en contact avec la came 36 en remontant, il pousse cette came vers la droite sur le dessin et fait pivoter la chape 30 autour de l'axe 34 dans le sens contraire des aiguilles d'une montre en écartant la roue dentée 28 de la crémaillère 22.

Le doigt 40 est positionné perpendiculairement par rapport à l'aiguille 10 pour venir en contact avec la came 36 comme représenté en figure 2 lorsque l'aiguille est déjà sortie du bouchon 12 du tube 14. Après avoir actionné la came 36, le doigt 40 vient en contact avec une butée 42 qui est solidaire de la crémaillère 22, pour remonter la pièce d'appui 20 qui est restée sur le bouchon 12, ce qui permet ensuite un déplacement horizontal du dispositif sans toucher aux tubes qui sont à proximité.

Le dispositif selon l'invention fonctionne de la façon suivante :

il est tout d'abord déplacé dans un plan horizontal pour amener l'aiguille 10 au-dessus d'un tube 14, puis l'aiguille 10 est descendue vers ce tube. Simultanément, la pièce 20 portée par l'extrémité inférieure de la crémaillère 22 est appliquée sur le bouchon 12, la descente de la crémaillère étant permise par la roue dentée 28 en prise avec les dents de la crémaillère et par le mécanisme de rotation unidirectionnelle associé à la roue dentée.

L'aiguille 10 traverse ensuite le bouchon 12 et, dans la position de la figure 1, permet le prélèvement d'une quantité déterminée du liquide contenu dans le tube 14.

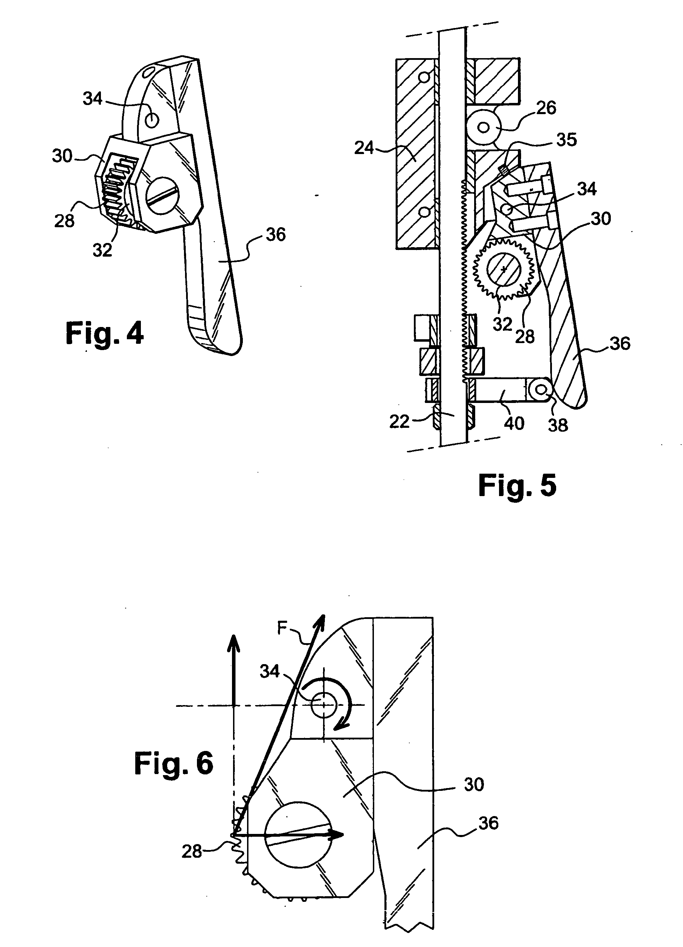

Ensuite, l'aiguille est remontée et extraite du bouchon 12 comme représenté en figure 2, la pièce 20 étant maintenue en appui sur le bouchon 12 du tube, par la roue dentée 28 dont la rotation est interdite et qui bloque la remontée de la crémaillère 22. Dans cette position, la résultante F des forces exercées par la crémaillère 22 sur les dents de la roue dentée 28 est orientée vers le haut et passe sur la gauche de l'axe de pivotement 34 (figure 6) de sorte qu'un couple de rotation est exercé sur la chape 30 dans le sens indiqué par la flèche, pour maintenir la roue dentée 28 en prise avec la crémaillère.

Quand la remontée de l'aiguille 10 est telle que le doigt 40 atteint la came 36, la chape 30 pivote autour de l'axe 34 dans le sens contraire des aiguilles d'une montre et la roue dentée 28 est dégagée de la crémaillère 22. Cette crémaillère va alors accompagner l'aiguille dans sa remontée et libérer le tube 14, en raison de l'appui du doigt 40 sur la butée 42.

Lors de l'utilisation suivante du dispositif de prélèvement de liquide, lorsque l'aiguille est descendue vers le bouchon 12 d'un tube 14, la crémaillère 22 descend par gravité et la pièce d'appui 20 montée à l'extrémité inférieure de la crémaillère s'applique sur le bouchon du tube.

Ce mode de réalisation de l'invention est applicable au cas où les tubes d'une série de tubes placés dans le support 16 ont tous la même hauteur.

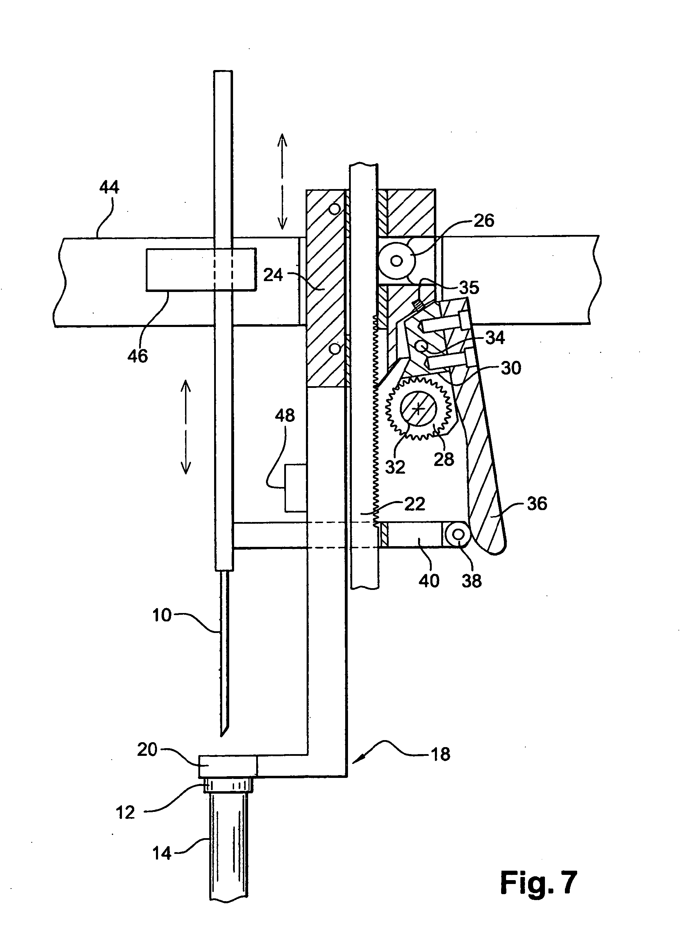

Le mode de réalisation représenté en figure 7 est utilisable avec des tubes 14 ayant des hauteurs différentes. Il diffère du mode de réalisation des figures 1 à 6 en ce que la crémaillère 22 est fixe et montée sur un support fixe 44 qui porte également des moyens motorisés 46 de déplacement vertical de l'aiguille 10, tandis que le palier 24 est guidé en translation sur la crémaillère 22 et porte les moyens d'immobilisation 18 comprenant la pièce 20 d'appui sur le bouchon 12 d'un tube 14.

Dans ce mode de réalisation, le mécanisme 32 de rotation unidirectionnelle de la roue dentée 28 permet la descente du palier 24 le long de la crémaillère et s'oppose à sa remontée, quand la roue dentée 28 est en prise avec la crémaillère 22.

Le dispositif de la figure 7 fonctionne de la façon suivante :

Quand l'aiguille 10 est en position haute, le doigt 40 fixé sur le support de l'aiguille est en appui sur une cale 48 solidaire des moyens d'immobilisation 18 et maintient ces derniers en position haute, où la pièce d'appui 20 est écartée du bouchon 12 d'un tube 14.

Dans cette position, la roue dentée 28 est écartée de la crémaillère 22 par la came 36 en appui sur le galet 38 du doigt 40.

Quand l'aiguille 10 est descendue vers le bouchon 12 du tube, elle laisse descendre avec elle les moyens d'immobilisation 18 jusqu'à ce que la pièce 20 soit en appui sur le bouchon 12 comme représenté en figure 7.

Ensuite, quand l'aiguille 10 est encore descendue, le doigt 40 libère la came 36 et la roue dentée 28 vient en prise avec la crémaillère 22.

L'aiguille 10 est enfoncée dans le bouchon 12 pour un prélèvement de liquide dans le tube 14.

Quand l'aiguille 10 est extraite du bouchon, la pièce d'appui 20 est maintenue sur le bouchon du tube car le mécanisme 32 s'oppose à la rotation de la roue dentée 28 dans le sens de la remontée du palier 24.

L'aiguille 10 poursuit sa remontée jusqu'à ce que le doigt 40 vienne buter sur la came 36 et écarte la roue dentée 28 de la crémaillère 22. Ensuite, la remontée de l'aiguille 10 provoque la remontée du palier 24 par appui du doigt 40 sur la cale 48 des moyens d'immobilisation 18.

Dans ce dispositif, la remontée des moyens d'immobilisation 18 par appui du doigt 40 sur la cale 48 ne dépend pas de la hauteur du tube 14 et se produit toujours après écartement de la roue dentée 32, quelle que soit la hauteur du tube, le dispositif s'adaptant automatiquement et sans réglage à toutes les hauteurs de tube.

## Revendications

1. Dispositif de prélèvement de liquide dans un tube (14) fermé par un bouchon (12), comprenant une aiguille (10) déplacée en translation par des moyens moteurs pour traverser le bouchon (12) du tube, des moyens (18, 20) d'immobilisation du tube déplaçables avec l'aiguille pour s'appliquer sur le bouchon (12) quand l'aiguille (10) est descendue à travers le bouchon, des moyens de blocage des moyens d'immobilisation quand l'aiguille est remontée à travers le bouchon et des moyens de déblocage des moyens d'immobilisation quand l'aiguille est sortie du bouchon, **caractérisé en ce que** les moyens de blocage comprennent une roue dentée (28) montée tournante sur une chape (30) par l'intermédiaire d'un mécanisme (32) à rotation unidirectionnelle, ladite chape étant montée pivotante autour d'un axe (34) entre une première position où la roue dentée (28) est en prise avec une crémaillère (22) parallèle à la direction de déplacement de l'aiguille et une seconde position où elle est écartée de cette crémaillère, le mécanisme à rotation unidirectionnelle (32) de la roue dentée (28) autorisant, quand la roue dentée est dans la première position, une descente des moyens d'immobilisation (18) et interdisant dans cette première position la remontée des moyens d'immobilisation (18).

2. Dispositif selon la revendication 1, **caractérisé en ce que** le centre de gravité de la chape (30) de la roue dentée (28) est excentré par rapport à l'axe (34) de rotation de la chape de façon à ce que la roue dentée soit amenée par gravité dans sa première position.

3. Dispositif selon la revendication 2, **caractérisé en ce que** la chape (30) est sollicitée par un ressort (35) en rotation autour de l'axe (34) dans un sens appliquant la roue dentée (28) sur la crémaillère (22).

4. Dispositif selon l'une des revendications 1 à 3, **caractérisé en ce que** les moyens de déblocage comprennent un doigt transversal (40) déplacé par l'aiguille pour venir s'appliquer, quand l'aiguille est sortie du bouchon, sur la chape (30) de la roue dentée (28) et faire pivoter cette chape autour de l'axe de rotation (34) pour amener la roue dentée (28) dans sa seconde position.

5. Dispositif selon la revendication 4, **caractérisé en ce que** le doigt transversal (40) porte un galet tournant (38) de contact avec la chape de la roue dentée (28).

6. Dispositif selon l'une des revendications précédentes, **caractérisé en ce que** l'axe (34) de pivotement de la chape (30) de la roue dentée est monté sur un palier (24) de guidage en translation sur la crémaillère (22).

7. Dispositif selon la revendication 6, **caractérisé en ce que** la crémaillère (22) et le palier de guidage (24) sont immobilisés en rotation l'un par rapport à l'autre par un galet tournant (26) monté dans le palier et engagé sur la crémaillère.

8. Dispositif selon l'une des revendications précédentes, **caractérisé en ce que** le palier de guidage (24) est monté sur un support fixe et la crémaillère (22) est solidaire des moyens d'immobilisation (18).

9. Dispositif selon l'une des revendications 1 à 7, **caractérisé en ce que** la crémaillère (22) est montée sur un support fixe (44) et le palier de guidage (24) est solidaire des moyens d'immobilisation (18).

10. Dispositif selon l'une des revendications précédentes, **caractérisé en ce que** les moyens de déblocage comprennent des moyens (40, 48) de remontée des moyens d'immobilisation (18) quand l'aiguille est sortie du tube.

## Claims

1. Device for sampling a liquid in a tube (14) closed by a cap (12), comprising a needle (10) displaced in translation by motor means in order to pass through the cap (12) of the tube, means (18, 20) of immobilising the tube which can be displaced with the needle in order to press against the cap (12) when the needle (10) is descended through the cap, means for blocking means for immobilising when the needle is raised through the cap and means for unblocking means for immobilising when the needle is out of the cap, **characterised in that** the means for blocking include a toothed wheel (28) mounted rotating about a stirrup (30) by the intermediary of a unidirectional rotation mechanism (32), said stirrup being mounted pivoting around an axis (34) between a first position where the toothed wheel (28) is engaged with a rack (22) parallel to the direction of displacement of the needle and a second position where it is separated from this rack, the unidirectional rotation mechanism (32) of the toothed wheel (28) authorising, when the toothed wheel is in the first position, a descending of the means for immobilising (18) and prohibiting in this first position the rising of the means for immobilising (18).

2. Device according to claim 1, **characterised in that** the centre of gravity of the stirrup (30) of the toothed wheel (28) is off centre in relation to the axis (34) of rotation of the stirrup in such a way that the toothed wheel is brought by gravity into its first position.

3. Device according to claim 2, **characterised in that** the stirrup (30) is solicited by a spring (35) in rotation around the axis (34) in a direction pressing the toothed wheel (28) on the rack (22).

4. Device according to one of claims 1 to 3, **characterised in that** the means for unblocking include a transversal finger (40) displaced by the needle in order to come and press, when the needle is out of the cap, against the stirrup (30) of the toothed wheel (28) and pivot this stirrup around the axis of rotation (34) in order to bring the toothed wheel (28) into its second position.

5. Device according to claim 4, **characterised in that** the transversal finger (40) bears a contact roller bearing (38) with the stirrup of the toothed wheel (28).

6. Device according to one of the preceding claims, **characterised in that** the pivoting axis (34) of the stirrup (30) of the toothed wheel is mounted on a steady bearing (24) in translation on the rack (22).

7. Device according to claim 6, **characterised in that** the rack (22) and the steady bearing (24) are immobilised in rotation in relation to one another by a roller bearing (26) mounted in the bearing and engaged on the rack.

8. Device according to one of the preceding claims, **characterised in that** the steady bearing (24) is mounted on a fixed support and the rack (22) is fastened to the means for immobilising (18).

9. Device according to one of claims 1 to 7, **characterised in that** the rack (22) is mounted on a fixed support (44) and the steady bearing (24) is fastened to the means for immobilising (18).

10. Device according to one of the preceding claims, **characterised in that** the means for unblocking include means (40, 48) for raising means for immobilising (18) when the needle is out of the tube.

## Patentansprüche

1. Vorrichtung zur Entnahme einer Flüssigkeit aus einem durch einen Stöpsel (12) geschlossenen Rohr (14), umfassend eine Nadel (10), die in Translation durch Antriebsmittel verschoben wird, um durch den Stöpsel (12) des Rohrs hindurchzugehen, Mittel (18, 20) zur Feststellung des Rohrs, die mit der Nadel verschiebbar sind, um sich an den Stöpsel (12) anzulegen, wenn die Nadel (10) durch den Stöpsel geführt wird, Mittel zum Blockieren der Feststellungsmittel, wenn die Nadel wieder durch den Stöpsel hochgefahren wird, und Mittel zur Freigabe der Feststellungsmittel, wenn die Nadel aus dem Stöpsel gezogen wird, **dadurch gekennzeichnet, dass** die Blockiermittel ein Zahnrad (28) umfassen, das drehbar auf einem Aufsatz (30) mit Hilfe eines unidirektionalen Drehmechanismus (32) montiert ist, wobei der Aufsatz schwenkbar um eine Achse (34) zwischen einer ersten Position, in der das Zahnrand (28) mit einer Zahnstange (22) parallel zur Verschieberichtung der Nadel im Eingriff steht, und einer zweiten Position, in der es von dieser Zahnstange entfernt ist, montiert ist, wobei der unidirektionale Drehmechanismus (32) des Zahnrades (28), wenn das Zahnrad in der ersten Position ist, ein Absteigen der Feststellungsmittel (18) gestattet und in dieser ersten Position das Aufsteigen der Feststellungsmittel (18) verhindert.

2. Vorrichtung nach Anspruch 1, **dadurch gekennzeichnet, dass** der Schwerpunkt des Aufsatzes (30) des Zahnrades (28) in Bezug zur Drehachse (34) des Aufsatzes exzentrisch angeordnet ist, so dass das Zahnrad durch Schwerkraft in seine erste Position gebracht wird.

3. Vorrichtung nach Anspruch 2, **dadurch gekennzeichnet,**
**dass** der Aufsatz (30) durch eine Feder (35) in Drehung um die Achse (34) in eine Richtung, die das Zahnrad (28) an die Zahnstange (22) anlegt, beansprucht wird.

4. Vorrichtung nach einem der Ansprüche 1 bis 3, **dadurch gekennzeichnet, dass** die Freigabemittel einen quer verlaufenden Finger (40) umfassen, der von der Nadel verschoben wird, um sich, wenn die Nadel aus dem Stöpsel gezogen wird, an den Aufsatz (30) des Zahnrades (28) anzulegen und diesen Aufsatz um die Drehachse (34) zu schwenken, um das Zahnrad (28) in seine zweite Position zu bringen.

5. Vorrichtung nach Anspruch 4, **dadurch gekennzeichnet, dass** der quer verlaufende Finger (40) eine drehbare Kontaktrolle (38) mit dem Aufsatz des Zahnrades (28) trägt.

6. Vorrichtung nach einem der vorhergehenden Ansprüche, **dadurch gekennzeichnet, dass** die Schwenkachse (34) des Aufsatzes (30) des Zahnrades auf einem Lager (24) zur Führung in Translation auf der Zahnstange (22) montiert ist.

7. Vorrichtung nach Anspruch 6, **dadurch gekennzeichnet, dass** die Zahnstange (22) und das Führungslager (24) durch eine drehbare Rolle (26), die in dem Lager montiert ist und in die Zahnstange eingreift, gegeneinander drehfest gestellt sind.

8. Vorrichtung nach einem der vorhergehenden Ansprüche, **dadurch gekennzeichnet, dass** das Führungslager (24) auf einer festen Stütze montiert ist, und dass die Zahnstange (22) mit Feststellungsmitteln (18) verbunden ist.

9. Vorrichtung nach einem der Ansprüche 1 bis 7, **dadurch gekennzeichnet, dass** die Zahnstange (22) auf einer festen Stütze (44) montiert ist, und dass das Führungslager (24) mit den Feststellungsmittel (18) verbunden ist.

10. Vorrichtung nach einem der vorhergehenden Ansprüche, **dadurch gekennzeichnet, dass** die Freigabemittel Mittel (40, 48) zum Hochfahren der Feststellungsmittel (18), wenn die Nadel aus dem Rohr gezogen wird, umfassen.
